# EUROPÄISCHE PATENTANMELDUNG

(11) **EP 1 759 971 A2**
(43) Veröffentlichungstag der Anmeldung: **07.03.2007**
(21) Anmeldenummer: 06013695.9
(22) Anmeldetag: 01.07.2006
(51) Int. Cl.: B62J 39/00, G01D 5/14

(54) **Verfahren zur drahtlosen Datenübertragung bei einem Fahrradcomputer**

(30) Priorität: 31.08.2005 DE 102005041458
(71) Anmelder: Trelock GmbH, 48163 Münster (DE)
(72) Erfinder: Kortenbrede, Ludger, 48291 Telgte (DE); Wewer, Franz-Josef, 48291 Telgte (DE); Steinkamp, Winfried, 48249 Dülmen (DE); Wissmann, Andreas, 48346 Ostbevern (DE)
(74) Vertreter: Hentrich, Swen

(57) **Zusammenfassung**

Die Erfindung ist gebildet durch ein Verfahren zur drahtlosen Datenübertragung bei einem Fahrradcomputer als Informations- und/oder Bedieneinheit, der eine Recheneinheit, eine Speichereinheit, eine Eingabeeinheit und ein Display sowie mindestens einen Sender und mindestens einen Empfänger aufweist, die einem Sensor und/oder einem Aktuator und/oder der Recheneinheit zugeordnet sind, bei dem der Empfänger in einem Schlafmodus mit reduziertem Energieverbrauch als Grundzustand betrieben wird, bei dem die Daten in dem Sender als eine Folge von Signalen codiert werden und dieser Signalfolge ein Identitätssignal vorangestellt wird, das vom Empfänger im Schlafmodus empfangen und überprüft wird, und bei Übereinstimmung mit dem in der Speichereinheit hinterlegten erwarteten Identitätssignal den Empfänger zum Übergang in einen Aktivmodus mit dem Empfang der vollständigen Signalfolge und deren Auswertung in der Recheneinheit veranlaßt.

## Beschreibung

Die Erfindung ist gebildet durch ein Verfahren zur drahtlosen Datenübertragung bei einem Fahrradcomputer als Informations- und/oder Bedieneinheit, der eine Recheneinheit, eine Speichereinheit, eine Eingabeeinheit und ein Display sowie mindestens einen Sender und mindestens einen Empfänger aufweist, die einem Sensor und/oder einem Aktuator und/oder der Recheneinheit zugeordnet sind, bei dem der Empfänger in einem Schlafmodus mit reduziertem Energieverbrauch als Grundzustand betrieben wird, bei dem die Daten in dem Sender als eine Folge von Signalen codiert werden und dieser Signalfolge ein Identitätssignal vorangestellt wird, das vom Empfänger im Schlafmodus empfangen und überprüft wird, und bei Übereinstimmung mit dem in der Speichereinheit hinterlegten erwarteten Identitätssignal den Empfänger zum Übergang in einen Aktivmodus mit dem Empfang der vollständigen Signalfolge und deren Auswertung in der Recheneinheit veranlaßt.

Fahrradcomputern ist ein zunehmend komplexerer Aufgabenbereich zugewiesen worden, so daß diese nicht mehr nur der Erfassung der Wegstrecke und der Geschwindigkeit dienen, sondern auch zur Überwachung des Gesundheitszustandes und Leistungsvermögens des Radfahrers vorgesehen sind durch eine Erfassung des Pulses und der Trittfrequenz. Darüber hinaus fungieren Fahrradcomputer zum Teil auch schon zum Schalten des Fahrradzubehörs wie zum Beispiel der Beleuchtung. Bevorzugt ist dabei eine kabellose Interaktion, damit insbesondere auch die Nachrüstung problemlos möglich ist. Dem Fahrradcomputer können daher sowohl der Empfänger als auch der Sender zugeordnet sein zum bidirektionalen Datenaustausch, während den Sensoren vorzugsweise die Sender und den Aktuatoren, wie zum Schalten der Beleuchtung, die Empfänger zugeordnet sind. Es kann allerdings auch sinnvoll sein, die Peripherie zum bidirektionalen Datenaustausch zuzulassen, also beispielsweise dem Schalter für die Beleuchtung auch einen Spannungsmesser zuzuordnen und dessen Daten an den Fahrradcomputer zu übertragen. Problematisch bei diesem vielfältigen Datenaustausch ist dabei der Energieverbrauch, da die dazu erforderliche Energie mit dem Fahrrad in elektrischen Speicherzellen, wie Batterien, Akkumulatoren oder Kondensatoren, mitgeführt werden muß.

Der Erfindung liegt die Aufgabe zugrunde, ein Verfahren bereit zu stellen, mit dem der Energieverbrauch reduziert werden kann.

Diese Aufgabe wird durch das eingangs genannte Verfahren gelöst, das sich durch die Vorteile auszeichnet, daß die Empfänger nur in den energetisch ungünstigen Aktivmodus übergehen, wenn tatsächlich Daten vorliegen, die für den Empfänger bestimmt sind. Vorteilhaft ist weiterhin, daß Störsignale weitgehen unterdrückt werden, da diese das Identitätssignal in der Regel nicht beinhalten. Als Vorteil zu beachten ist auch, daß durch den Nutzer ein aktives Einschalten der Empfänger vor Fahrtantritt nicht erforderlich ist, da dies selbsttätig erfolgt, insbesondere auch nach einer Fahrtunterbrechung.

Nach sparsamer im Energieverbrauch ist ein Verfahren, bei dem aus einem Ruhezustand in regelmäßigen oder stochastischen Abständen der Schlafmodus initiiert und das Vorliegen des Identitätssignals überprüft wird. Dies bedeutet, daß nur für den Bruchteil einer Zeitspanne, beispielsweise einer Sekunde oder einem Intervall von 5 Sekunden, tatsächlich der Schlafmodus mit der Empfangsbereitschaft gegeben sein muß, während im komplementären Intervall der Energieverbrauch auf die interne Uhr beschränkt sein kann.

Für eine störungsfreie Datenerfassung ist vorgesehen, daß nach der Detektion des Identitätssignals und dem Übergang in den Aktivmodus die Rückkehr in den Schlafmodus bis zum Ausbleiben von Signalfolgen mit den Identitätssignal unterdrückt wird.

Um einen verbesserten Schutz gegen Störsignale zu erzielen, ist vorgesehen, daß der Sender nach dem Identitätssignal eine Wecksignalfolge der Signalfolge voranstellt, die im Empfänger den Übergang in den Aktivmodus auslöst. Es erfolgt also ein zweistufiger Weckprozeß, bei dem sukzessive Daten mit steigendem Informationsgehalt auf deren korrekte Abfolge und Dateninhalt überprüft werden, bevor die Aktivierung erfolgt.

Eine weitere Steigerung der Sicherheit und Verläßlichkeit bei der Datenübertragung läßt sich erreichen, wenn im Schlafmodus das vom Sender abgestrahlte Trägersignal für die Daten über ein vorbestimmtes Zeitintervall überprüft wird, und in Abhängigkeit es Ergebnis dieser Überprüfung j die Auswertung des Identitätssignals initiiert oder die erneute Überprüfung des Trägersignals abgewartet wird. Man gelangt so zu einem dreistufigen Ablauf, der insbesondere einen verbesserten Schutz gegen Störsignale bietet, da nur die korrekten Trägersignale die erforderliche Überprüfung initieren, ob der Schlafmodus beendet und der Übergang in den Aktivmodus erfolgen muß. Empfängt der Empfänger ein nicht erwartetes und damit falsches Trägersignal, kann sofort die Auswertung des Identitätssignals unterbleiben und dadurch Energie eingespart werden, insbesondere wenn der Empfänger sehr häufig Störsignalen ausgesetzt ist.

## Patentansprüche

1. Verfahren zur drahtlosen Datenübertragung bei einem Fahrradcomputer als Informations- und/oder Bedieneinheit, der eine Recheneinheit, eine Speichereinheit, eine Eingabeeinheit und ein Display sowie mindestens einen Sender und mindestens einen Empfänger aufweist, die einem Sensor und/oder einem Aktuator und/oder der Recheneinheit zugeordnet sind, bei dem der Empfänger in einem Schlafmodus mit reduziertem Energieverbrauch als Grundzustand betrieben wird, bei dem die Daten in dem Sender als eine Folge von Signalen codiert werden und dieser Signalfolge ein Identitätssignal vorangestellt wird, das vom Empfänger im Schlafmodus empfangen und überprüft wird, und bei Übereinstimmung mit dem in der Speichereinheit hinterlegten erwarteten Identitätssignal den Empfänger zum Übergang in einen Aktivmodus mit dem Empfang der vollständigen Signalfolge und deren Auswertung in der Recheneinheit veranlaßt.

2. Verfahren nach Anspruch 1, **dadurch gekennzeichnet, daß** aus einem Ruhezustand in regelmäßigen oder stochastischen Abständen der Schlafmodus initiiert und das Vorliegen des Identitätssignals überprüft wird.

3. Verfahren nach Anspruch 1 oder 2, **dadurch gekennzeichnet, daß** nach der Detektion des Identitätssignals und dem Übergang in den Aktivmodus die Rückkehr in den Schlafmodus bis zum Ausbleiben von Signalfolgen mit den Identitätssignal unterdrückt wird.

4. Verfahren nach einem der Ansprüche 1 bis 3, **dadurch gekennzeichnet, daß** der Sender nach dem Identitätssignal eine Wecksignalfolge der Signalfolge voranstellt, die im Empfänger den Übergang in den Aktivmodus auslöst.

5. Verfahren nach einem der Ansprüche 1 bis 4, **dadurch gekennzeichnet, daß** im Schlafmodus das vom Sender abgestrahlte Trägersignal für die Daten über ein vorbestimmtes Zeitintervall überprüft wird, und in Abhängigkeit es Ergebnis dieser Überprüfung die Auswertung des Identitätssignals initiiert oder die erneute Überprüfung des Trägersignals abgewartet wird.
